(19) Europäisches Patentamt
European Patent Office
Office européen des brevets

(11) EP 3 165 547 A1

(12) EUROPEAN PATENT APPLICATION

(43) Date of publication:
**10.05.2017 Bulletin 2017/19**

(21) Application number: **16195150.4**

(22) Date of filing: **21.10.2016**

(51) Int Cl.:
***C08G 18/48*** *(2006.01)* ***C08G 18/73*** *(2006.01)*
***C08G 18/75*** *(2006.01)* ***C08G 18/08*** *(2006.01)*
***C08G 18/22*** *(2006.01)* ***C08G 18/24*** *(2006.01)*
***C08G 18/28*** *(2006.01)* ***C09D 7/00*** *(2006.01)*
***C09D 175/08*** *(2006.01)* ***C08G 18/30*** *(2006.01)*
***C08G 18/10*** *(2006.01)* ***C08G 18/12*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.11.2015 US 201562251311 P**

(71) Applicant: **Rohm and Haas Company**
**Philadelphia, PA 19106 (US)**

(72) Inventors:
- **MCCULLOCH, Bryan L.**
**Collegeville, PA 19426 (US)**
- **RABASCO, John J.**
**Collegeville, PA 19426 (US)**
- **VAN DYK, Antony K.**
**Collegeville, PA 19426 (US)**

(74) Representative: **Mauro, Marina Eliana**
**Murgitroyd & Company**
**Piazza Borromeo, 12**
**20123 Milano (IT)**

(54) **HEUR THICKENER**

(57) A water soluble or water dispersible associative thickener having a) a hydrophobic portion with a calculated log P (CLogP) in the range of from 2.9 to 8.2; and b) a weight average molecular weight (Mw) from 48,000 to 150,000; wherein the associative thickener comprises a polyether, a polyalkylene oxide, a polymethacrylamide, a polysaccharide, or a polyvinyl alcohol backbone.

EP 3 165 547 A1

## Description

Field of the Invention

The present invention relates to a hydrophobically modified urethane thickener.

Background of the Invention

Hydrophobically modified urethane thickeners (HEURs) are water soluble polymers containing hydrophobic groups, and are classified as associative thickeners because the hydrophobic groups associate with one another in water. In a latex paint formulation, the hydrophobic groups adsorb to latex particle surfaces to form a transient network of bridged latex particles that gives rise to viscosity increase and desirable rheological characteristics over a wide range of shear rates. For example, US7741402 discloses HEUR thickeners.

However, although HEURs impart desirable rheological properties to coating formulations, it is well known that their use in some formulations adversely impacts hiding, tint strength, and opacity of the consequently coated substrate. Therefore, multiple coatings are often required to achieve the desired hiding of the color and appearance of the original surface.

It would therefore be an advance in the art of HEUR thickened coatings compositions to discover a HEUR that imparts improved opacity, tint strength, and hiding to a coating composition.

Summary of the Invention

The present invention is directed to water soluble or water dispersible associative thickeners having a) a hydrophobic portion with a calculated log P (CLogP) in the range of from 2.9 to 8.2; and b) a weight average molecular weight (Mw) from 48,000 to 150,000; wherein the associative thickener comprises a polyether, a polyalkylene oxide, a polymethacrylamide, a polysaccharide, or a polyvinyl alcohol backbone.

Detailed Description of the Invention

All percentages are weight percentages (wt%) and all temperatures are in °C, unless otherwise specified. All operations are performed at room temperature (20-25°C) unless otherwise specified.

As used herein, the term "water-soluble polyalkylene glycol" refers to one or more polyethylene oxides, water-soluble polyethylene oxide/polypropylene oxide copolymers, water-soluble polyethylene oxide/polybutylene oxide copolymers, and water-soluble polyethylene oxide/polypropylene oxide/polybutylene oxide terpolymers. As used herein, the term "water-soluble" means soluble in water at least to the extent of 10 wt%, based on total weight of solution (preferably 20 wt%).

Preferred water-soluble polyalkylene glycols are polyethylene glycols, preferably polyethylene glycols having a weight average molecular weight ($M_w$) in the range of from 6,000 to 10,000 Daltons. An example of a suitable polyethylene glycol is PEG 8000, which is commercially available as CARBOWAX™ 8000 Polyethylene Glycol (a trademark of The Dow Chemical Company or its Affiliates). Mw is measured by the Size Exclusion Chromatrography (SEC) method described below.

The backbone of the associative thickener need only be hydrophilic and preferably comprises a polyalkylene oxide backbone. More preferably, the associative thickener is a hydrophobically modified alkylene oxide urethane polymer, most preferably a hydrophobically modified ethylene oxide urethane polymer (a HEUR). This polymer may be prepared by contacting together under reactive conditions a) a diisocyanate; b) a water-soluble polyalkylene glycol; c) optionally a polyol with at least three hydroxyl groups, d) optionally a polyisocyanate with at least three isocyanate groups, e) optionally a hydrophobic difunctional agent and f) a hydrophobic capping agent. The order of reactant charging may be varied as generally known for the synthesis of urethane polymers. For example, all of the reactants may be reacted together in a single synthesis step, or the reactants may be reacted in any synthetic sequence to achieve the desired final polymer. As is well known in the art of step growth polymerization to produce urethane polymers, the molar equivalent ratio of the ingredients is used to control such properties like molecular weight.

In a preferred embodiment, the thickener is a hydrophobically modified alkylene oxide poly(urethane-urea-allophanate) thickener comprising polymerized units of: (a) a water-soluble polyalkylene glycol having a weight average molecular weight ($M_w$) from 4,000 to 10,000; (b) a $C_4$-$C_{20}$ aliphatic diisocyanate; and c) optionally a polyol with at least three hydroxyl groups, d) optionally a polyisocyanate with at least three isocyanate groups, e) optionally a hydrophobic difunctional agent, f) optionally water, and (g) a hydrophobic capping agent; and wherein $M_w$ of the thickener is from 48,000 to 150,000. Preferably, there is a 2 to 50 percent stoichiometric excess of diisocyanate units with respect to the sum of the moles of isocyanate reactive groups of the polyalkylene glycol and the capping agent or the hydrophobic

difunctional agent or a combination thereof. Preferably, the calculated log P for the hydrophobic portion of the thickener is from 4 to 7.6, preferably from 4.5 to 7.0. Preferably, the polyurethane thickener also comprises urea and/or biuret and/or allophanate groups. For example, urea groups form when reactants such as amines or water are used during the preparation of the polyurethane thickener.

As used herein, the term "hydrophobic capping agent" refers to a monofunctional compound comprising three or more carbon atoms that has a hydrophobic portion and that contains an isocyanate reactive group; as used herein, the term "isocyanate reactive group" refers to an OH group, SH group or a $NHR^3$ group, where $R^3$ is H or a $C_1$-$C_{20}$ alkyl group. Preferably the hydrophobic capping agent is a $C_3$-$C_{18}$ aliphatic or aralkyl alcohol or an alkoxlyate thereof; a $C_3$-$C_{18}$ aliphatic or aralkyl amine or aliphatic tertiary aminoalcohol, or an alkoxlyate thereof. Preferably, alcohols, amines and tertiary aminoalcohols are $C_4$-$C_{12}$. Further examples of reagents that can be used to generate hydrophobic capping agents with a tertiary amine group include those described in US7741402.

As used herein, the term "hydrophobic difunctional agent" is a difunctional compound with a hydrophobic portion and two isocyanate reactive groups. Examples include alkyldiamines such as 1,2-octanediamine, 1,2-decanediamine, 1,2-dodecanediamine, 1,2-ethanediamine, propanediamines, 1,6-hexanediamines, and 1,10-decanediamine; and alkyl diols such as 1,2-octanediol, 1,8-octanediol, 1,2-decanediol, 1,2-dodecanediol, 1,2-ethanediol, propanediols, 1,6-hexanediol, and 1,10-decanediol. Further examples of reagents that can be used to generate hydrophobic difunctional agents with at a tertiary amine group include the class of diols of Formula II:

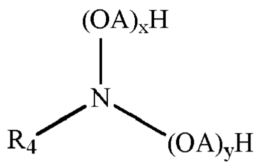

II

wherein -(OA)- are $C_2$-$C_4$ oxyalkylene groups, preferably oxyethylene groups; $R_4$ is preferably a $C_4$-$C_{30}$ linear, branched, or cyclic, saturated or unsaturated, aliphatic or aromatic group, or a combination thereof; and x and y are at least 1, and x + y is from 2 to 100. Examples of diols of Formula II include bis(2-hydroxyethyl)cetylamine, bis(2-hydroxyethyl)stearylamine, polyethoxylated tallow amines, bis(2-hydroxyethyl)soya amine, bis(2-hydroxyethyl) isodecyloxypropylamine, bis(2-hydroxyethyl) isotridecyloxypropylamine, bis(2-hydroxyethyl) linear alkyloxypropylamine, and their alkoxylates. Other representative diols include bis(hydroxyethyl)decylamine, and bis(hydroxyethyl)dodecylamine. Any of the corresponding amine oxides of compounds of Formula II are also suitable hydrophobic difunctional agents. These reagents would be used to provide hydrophobic groups located within and pendant to the polymer chain. Further examples of reagents that can be used to generate hydrophobic difunctional agents with a tertiary amine group include those described in US7741402.

Other suitable hydrophobic difunctional agents include a class of diols advantageously prepared by the reaction of a secondary amine and a diglycidyl ether, for example, the reaction product of bis(2-ethylhexyl)amine and 1,4-butane diol diglycidyl ether. Still other suitable hydrophobic difunctional agents include the reaction product of a dialkylamine and glycidol, examples of which reaction products include 3-(diethylamino)-1,2-propanediol, 3-(diisopropylamino)-1,2-propanediol, 3-(dibutylamino)-1,2-propanediol, 3-(diamylamino)-1,2-propanediol, 3-(dihexylamino)-1,2-propanediol, 3-(dioctylamino)-1,2-propanediol, 3-[bis(2-ethylhexyl)amino]-1,2-propanediol, 3-(dibenzylamino)-1,2-propanediol, and 3-(dicyclohexylamino)-1,2-propanediol.

Examples of suitable diisocyanates include 1,4-tetramethylene diisocyanate, 1,6-hexamethylene diisocyanate (HDI), 2,2,4-trimethyl-1,6-diisocyanatohexane, 1,10-decamethylene diisocyanate, 4,4'-methylenebis(isocyanatocyclohexane) (H12MDI), 2,4'-methylenebis(isocyanatocyclohexane), 1,4-cyclohexylene diisocyanate, 1-isocyanato-3-isocyanatomethyl-3,5,5-trimethylcyclohexane (IPDI), *m*- and *p*-phenylene diisocyanate, 2,6- and 2,4-toluene diisocyanate, xylene diisocyanate, 4-chloro-1,3-phenylene diisocyanate, 4,4'-biphenylene diisocyanate, 4,4'-methylene diphenylisocyanate, 1,5-naphthylene diisocyanate, and 1,5-tetrahydronaphthylene diisocyanate. Aliphatic diisocyanates are preferred.

A branched hydrophobically modified alkylene oxide urethane polymer may be prepared by including a compound with at least three hydroxyl groups during the polymerization process. Examples of preferred compounds with at least three hydroxyl groups include glycerol and its alkoxylates, trimethyolpropane and its alkoxylates, pentaerythritol and its alkoxylates, and sorbitol and its alkoxylates.

A branched hydrophobically modified alkylene oxide urethane polymer may also be prepared by including a compound with at least three isocyanate groups during the polymerization process. Examples of preferred compounds with three isocyanate groups include cyanurate and biuret trimers such as HDI isocyanurate (trimer), and IPDI isocyanurate (trimer).

The hydrophobic portion from which calculated Log P (CLogP) is derived is characterized by either of the following formulas:

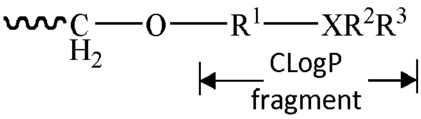


or

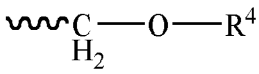

where the $CH_2$ is covalently bonded to the polymer backbone (squiggly line) through a saturated carbon atom; where X is O or N; where $R^1$ is a divalent fragment which is a polymerized unit of a diisocyanate and $R^2$ and $R^3$ are hydrogen or alkyl, provided that at least one is alkyl. X, $R^1$, $R^2$ and $R^3$ are selected to achieve the desired CLogP. $R_4$ is a substituted or unsubstituted alkyl group selected to achieve the desired CLogP. $R_4$ is the ClogP fragment in the second structure above. When X = oxygen, $R^3$ is not present in the above formula.

CLogP is calculated using ChemBioDraw Ultra 13.0 (PerkinElmer), which uses a chemical fragment algorithm method for assessing the partition coefficient of a molecule based on its constituent parts.

The water soluble or water dispersible associative thickeners may optionally contain internal hydrophobic modification where $R^5$ is an alkyl group. $R^1$ is a divalent NCO fragment and X is O or NH.

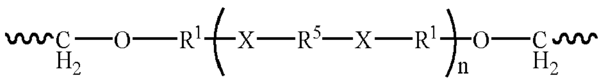

Where n is 0 to 8 (preferably 2 to 7) and CLogP for $R^1$-X-$R^5$-X-$R^1$ is from -0.5 (for n=0) to 5.7. Examples of pairings of $R^1$ and $R^2$/$R^3$ groups within the scope of the desired CLogP range are as follows:

| $R^1$ | $R^2$ | X | CLogP |
|---|---|---|---|
| -H12MDI- | $CH_3(CH_2)_7$- | O | 6.45 |
| -H12MDI- | $CH_3(CH_2)_5$- | O | 5.39 |
| -H12MDI- | $CH_3(CH_2)_4$- | O | 4.86 |
| -H12MDI- | $C_6H_5CH_2$- | O | 4.51 |
| -H12MDI- | $CH_3(CH_2)_3$- | O | 4.33 |
| -H12MDI- | $CH_3(CH_2)_2$- | O | 3.80 |
| -IPDI- | $CH_3(CH_2)_9$- | O | 6.51 |
| -IPDI- | $CH_3(CH_2)_7$- | O | 5.46 |
| -IPDI- | $CH_3(CH_2)_5$- | O | 4.40 |
| -IPDI- | $CH_3(CH_2)_4$- | O | 3.87 |
| -IPDI- | $CH_3(CH_2)_3$- | O | 3.34 |
| -HDI | Intermediate 1 | O | 6.22 |
| -HDI- | $CH_3(CH_2)_{11}$- | | 6.11 |
| -HDI- | $CH_3(CH_2)_9$- | O | 5.05 |
| -HDI- | $CH_3(CH_2)_8$- | O | 4.52 |
| -HDI- | $CH_3CH(CH_3)CH_2(CH_2)_2CH(CH_3)CH_2CH_2$- | O | 4.79 |
| -HDI- | $(C_6H_5CH_2)_2NCH_2CH_2$- | O | 4.27 |
| -HDI- | $CH_3(CH_2)_7$- | O | 3.99 |
| -HDI- | $(CH_3CH_2CH_2CH_2)_2NCH_2CH_2$- | O | 3.87 |
| -HDI- | $CH_3(CH_2)_6$- | O | 3.46 |
| -HDI- | $CH_3(CH_2)_5$- | O | 2.94 |

| $R^1$ | $R^2$ | $R^3$ | X | CLogP |
|---|---|---|---|---|
| -H12MDI- | $CH_3(CH_2)_5$- | $CH_3(CH_2)_5$- | N | 7.38 |
| -H12MDI- | $C_6H_5CH_2$- | $C_6H_5CH_2$- | N | 5.61 |
| -H12MDI- | $CH_3(CH_2)_2$- | $CH_3(CH_2)_2$- | N | 4.21 |
| -H12MDI- | $CH_3(CH_2)_3$- | $CH_3(CH_2)_3$- | N | 5.26 |
| -H12MDI- | $CH_3(CH_2)_3$- | H- | N | 3.94 |
| -H12MDI- | $CH_3(CH_2)_5$- | H- | N | 5.00 |
| -IPDI- | $CH_3(CH_2)_5$- | $CH_3(CH_2)_5$- | N | 6.39 |
| -HDI- | $C_6H_5CH_2$- | $C_6H_5CH_2$- | N | 3.07 |

| $R^1$ | $R^5$ | X | CLogP |
|---|---|---|---|
| -H12MDI- | $(CH_2)_2$ | O | 5.73 |
| -IPDI- | $(CH_2)_2$ | O | 3.74 |
| -HDI- | $(CH_2)_2$ | O | 0.82 |
| -H12MDI- | $(CH_2)_2$ | N | 5.15 |
| -IPDI- | $(CH_2)_2$ | N | 3.16 |
| -HDI- | $(CH_2)_2$ | N | 0.24 |
| -HDI- | $(CH_2)_6$ | O | 2.71 |

where -H12MDI- refers to isomers of methylenebis(isocyanatocyclohexane), -IPDI- refers to 1-isocyanato-3-isocyanatomethyl-3,5,5-trimethylcyclohexane, and -HDI- refers to hexamethylene diiscocyanate:

In one preferred process of the present invention, the polyalkylene glycol, the diisocyanate and the hydrophobic capping agent or the hydrophobic difunctional agent or the polyol with at least three hydroxyl groups or the polyisocyanate with at least three isocyanate groups or mixtures thereof are mixed and heated together, preferably at a temperature in the range of 50 °C to 110 °C, optionally in the presence of a small amount of an antioxidant such as butylated hydroxytoluene (BHT). A urethane promoting catalyst, preferably bismuth octoate is used to catalyze the reaction. The ingredients may be reacted in a single step or may be reacted in any sequential order.

When the hydrophobic capping agent or the hydrophobic difunctional agent comprise a tertiary amine, an acid such as acetic acid, polyacrylic acid, lactic acid, or gluconic acid is advantageously added to the solution to adjust pH and decrease the solution viscosity.

Preferably, $M_w$ of the associative thickener is at least 50,000, preferably at least 55,000; preferably no greater than 120,000, preferably no greater than 110,000, preferably no greater than 105,000, preferably no greater than 100,000.

HEUR based polymers produced as described herein are not merely urethane polymers with terminal and/or pendant hydrophobic groups required for associative thickening but can further include combinations of allophanate branch points in the polymer backbone and urea linkages. The HEUR based polymers may further include primary amine end groups or biuret branch points in the polymer backbone or a combination thereof.

Examples

Size Exclusion Chromatography (SEC) Method used to measure molecular weights:

Polymer samples were prepared in 100mM $NH_4Ac$ in MeOH (Optima grade from Fisher) at 2mg/g using 100% solids. Samples were brought into solution by shaking overnight on a mechanical shaker at room temperature. Next day, sample solutions were filtered using 0.45 μm PTFE filter.

SEC separations were carried out on a liquid chromatograph consisting of an Agilent 1100 Model isocratic

pump and injector (Waldbronn, Germany) and Waters 214 Model differential refractometer (Milford, MA) operated at 40 °C. System control, data acquisition, and data processing were performed using 3.1 version of Cirrus□ software (Polymer Laboratories, Church Stretton, UK).

SEC separations were performed in 100mM $NH_4Ac$ in MeOH (Optima grade from Fisher) @ 1ml/min using SEC column set composed of three Asahipak columns (300x7.5 mm ID) packed with highly cross-linked polar gel (pore size marked as GF-310HQ, GF-510HQ and GF-710HQ, particle size 9 mm) purchased from Shoko America (Torrance, CA). 100 mL of sample were subjected for SEC separation. Relative molecular weights of the analyzed samples were calculated using both a sample SEC chart and a 12 point calibration curve of narrow PEO standards

**Comparative 1**

CARBOWAX™ 8000 Polyethylene Glycol (PEG, a trademark of the Dow Chemical Company or its Affiliates, 1711.9 g) was heated to 110 °C *in vacuo* in a batch melt reactor for 2 h. While maintaining 110 °C reaction temperature, butylated hydroxytoluene (BHT, 0.182 g) and hexanol (18.91 g) were added to the reactor and the reaction mixture was stirred for 5 minutes. DESMODUR ™ W ($H_{12}MDI$ diisocyanate, 77.85 g) was then added to the reactor followed by 5 minutes of stirring. Bismuth octoate (28% Bi, 4.28 g) was then added to the reactor and the resulting mixture was stirred for 10 minutes at 110 °C. Subsequently, hexanol (3.26 g) was added to the reactor and mixing continued for another 10 minutes at 110 °C. The resulting molten polymer was removed from the reactor and cooled. $M_w$ as measured by the SEC method described herein was found to be 35,000 and $M_n$ = 18,000.

**Comparative 2**

The procedure outlined in Example 1 of U.S. Patent # 4,155,892 was followed:
A mixture of PEG-6000 polyethylene glycol (120 g) and toluene (400 g) were added to a vessel and dried by azeotropic distillation. The mixture is cooled to 75 °C and toluene diisocyanate (TDI, 2.80 g) was added to the mixture. The mixture was stirred for 5 minutes, then dibutyltin dilaurate (0.12 g) was added. The mixture was stirred for 2 hours, after which time dodecylisocyanate (3.40 g) was added. Stirring was continued for an additional 3 hours at 75 °C. The mixture was cooled to 60 °C and the polymer isolated via rotary evaporation. $M_w$ as measured by the SEC method described herein was found to be 22,500 and $M_n$ = 13,000.

| HEUR Type | **Comparative 1** | **Comparative 2** |
|---|---|---|
| HEUR Use Rate (#/100 gal) | 4.5 | 4.5 |
| ICI (24hr equil.) | 106.5 | 103.4 |
| KU (24hr equil.) | 0.99 | 0.92 |
| S/mil | 5.86 +/- 0.16 | 4.74 +/- 0.12 |
| Mw | 35,000 | 22,500 |

**Intermediate 1**

Diamylamine (372.4 g), butyl glycidyl ether (346.2 g) and water (27 g) were heated to reflux (105-115 °C) under a nitrogen atmosphere in a round bottom flask equipped with a condenser and mechanical stirrer. After 5 h, the mixture was cooled to 30 °C. The aminoalcohol product was isolated after water and residual butyl glycidyl ether were removed via vacuum distillation (14 mm Hg) over a temperature range of 30 150° C.

**Example 1 - HEUR Melt Reaction with Mw of 36,500 g/mol**

CARBOWAX™ 8000 Polyethylene Glycol (1500 g) was heated to 110 °C *in vacuo* in a batch melt reactor for 2 h. After cooling the reactor contents to 85 °C, BHT (0.156 g) and 3,7-dimethyl-1-octanol (DMO, 13.54 g), were added to the reactor and mixed for 5 minutes. DESMODUR ™ H (HDI, 43.95 g) was added to the reactor and mixed for 5 minutes. Bismuth octoate (28% Bi, 3.75 g) was then added to the reactor and the temperature of the mixture was maintained at 85 °C with stirring for 10 min. Additional DMO (15.04 g) was added to the reactor and mixing continued for another 10 minutes. The resulting molten polymer was removed from the reactor and cooled.

**Example 2 - HEUR Melt Reaction with Mw of 63,500 g/mol**

CARBOWAX™ 8000 Polyethylene Glycol (1500 g) was heated to 110 °C *in vacuo* in a batch melt reactor for 2 h. After cooling the reactor contents to 85 °C, BHT (0.156 g) and 3,7-dimethyl-1-octanol (13.54 g) was added to the reactor and mixed for 5 minutes. HDI (43.95 g) was then added to the reactor and mixed for 5 minutes. Bismuth octoate (28% Bi, 3.75 g) was then added to the reactor and the temperature of the mixture was maintained at 85 °C with stirring for 10 min. Water (250g) was added to the reactor and mixing continued for 10 minutes. The resulting molten polymer mixture was removed from the reactor and cooled. Additional water was added to the reactor to rinse out any remaining polymer and the rinses combined with the product mixture to obtain a final aqueous solution containing 25 wt% polymer solids.

**Example 3 - HEUR Melt Reaction with Mw of 50,000 g/mol**

The procedure of Example 1 was followed with the following amounts of each ingredient: CARBOWAX™ 8000 Polyethylene Glycol (1721 g), BHT (0.178 g), DMO (10.28 g), HDI (46.23 g) and bismuth octoate (4.30 g). The second stage charge of DMO was 14.24 grams.

**Example 4 - HEUR Melt Reaction with Mw of 60,000 g/mol**

The procedure of Example 1 was followed with the following amounts of each ingredient: CARBOWAX™ 8000 Polyethylene Glycol (1742.2 g), BHT (0.18 g), DMO (9.82 g), HDI (44.17 g) and bismuth octoate (4.36 g). The second stage charge of DMO was 9.82 grams.

**Example 5 - HEUR Melt Reaction with Mw of 37,000 g/mol**

The procedure of Example 2 was followed using these amounts of ingredients: CARBOWAX™ 8000 Polyethylene Glycol (1200 g), BHT (0.126 g), DMO (22.82 g), HDI (40.41 g), bismuth octoate (3.0 g), and water (250g). Water rinses were combined to obtain final aqueous solution product containing 20 wt% polymer solids.

**Example 6 - HEUR Melt Reaction with Mw of 34,000 g/mol**

The procedure of Example 2 was followed using these amounts of ingredients: CARBOWAX™ 8000 Polyethylene Glycol (1200 g), BHT (0.126 g), DMO (25.94 g), HDI (54.15 g), bismuth octoate (3.0 g), and water (250g). Water rinses were combined to obtain final aqueous solution product containing 25 wt% polymer solids.

**Example 7 - HEUR Melt Reaction with Mw of 34,000 g/mol**

The procedure of Example 2 was followed using these amounts of ingredients: CARBOWAX™ 8000 Polyethylene Glycol (1200 g), BHT (0.124 g), DMO (7.54 g), HDI (31.48 g), bismuth octoate (3.0 g), and water (250g). Water rinses were combined to obtain final aqueous solution product containing 25 wt% polymer solids.

**Example 8 - HEUR Melt Reaction with Mw of 29,000 g/mol**

The procedure of Example 1 was followed with the following amounts of each ingredient: CARBOWAX™ 4000 Polyethylene Glycol (1859 g), BHT (0.199 g), DMO (23.05 g), HDI (103.61 g) and bismuth octoate (4.65 g). The second stage charge of DMO was 31.91 grams.

**Example 9 - HEUR Melt Reaction with Mw of 46,000 g/mol**

The procedure of Example 2 was followed using these amounts of ingredients: CARBOWAX™ 4000 Polyethylene Glycol (1200 g), BHT (0.128 g), DMO (15.65 g), HDI (65.33 g), bismuth octoate (3.0 g), and water (250g). Water rinses were combined to obtain final aqueous solution product containing 25 wt% polymer solids.

**Example 10 - HEUR Solution Reaction with Mw of 94,000 g/mol**

PEG 8000 (150 g) and toluene (600 g) were heated to 110 °C under nitrogen in a 4-necked glass flask for 1 hr during which time water was removed via a Dean-Stark apparatus. After cooling the reactor contents to 90 °C, HDI (3.55 g) was then added to the reactor and mixed for 5 minutes. Dibutyl tin dilaurate (0.21 g) was then added to the

reactor and the temperature of the mixture was maintained at 90 °C with stirring for 60 minutes. Decanol (0.78g) was added and the reaction was allowed to continue for 30 minutes. The final polymer was precipitated in hexanes and dried via vacuum at room temperature for 24 hrs.

**Example 11 - HEUR Solution Reaction with Mw of 67,000 g/mol**

PEG 8000 (150 g) and toluene (600 g) were heated to 110 °C under nitrogen in a 4-necked glass flask for 1 hr during which time water was removed via a Dean-Stark apparatus. After cooling the reactor contents to 90 °C, HDI (3.94 g) was then added to the reactor and mixed for 5 minutes. Dibutyl tin dilaurate (0.21 g) was then added to the reactor and the temperature of the mixture was maintained at 90 °C with stirring for 60 minutes. Decanol (1.56g) was added and the reaction was allowed to continue for 30 minutes. The final polymer was precipitated in hexanes and dried via vacuum at room temperature for 24 hrs.

**Example 12 - HEUR Solution Reaction with Mw of 43,000 g/mol**

PEG 8000 (150 g) and toluene (500 g) were heated to 110 °C under nitrogen in a 4-necked glass flask for 1 hr during which time water was removed via a Dean-Stark apparatus. After cooling the reactor contents to 90 °C, HDI (4.73 g) was then added to the reactor and mixed for 5 minutes. Dibutyl tin dilaurate (0.21 g) was then added to the reactor and the temperature of the mixture was maintained at 90 °C with stirring for 60 minutes. Decanol (3.12g) was added and the reaction was allowed to continue for 30 minutes. The final polymer was precipitated in hexanes and dried via vacuum at room temperature for 24 hrs.

**Example 13 - HEUR Solution Reaction with Mw of 39,000 g/mol**

PEG 8000 (200 g) and toluene (500 g) were heated to 110 °C under nitrogen in a 4-necked glass flask for 1 hr during which time water was removed via a Dean-Stark apparatus. After cooling the reactor contents to 90 °C, HDI (6.15 g) was then added to the reactor and mixed for 5 minutes. Dibutyl tin dilaurate (0.21 g) was then added to the reactor and the temperature of the mixture was maintained at 90 °C with stirring for 60 minutes. Decanol (3.38g) was added and the reaction was allowed to continue for 30 minutes. A large excess of water (50g) was then added to the resulting polymer solution and the temperature of the mixture was maintained at 90 °C with stirring for 60 min. The final polymer was precipitated in hexanes and dried via vacuum at room temperature for 24 hrs.

**Example 14 - HEUR Solution Reaction with Mw of 47,000 g/mol**

PEG 8000 (200 g) and toluene (500 g) were heated to 110 °C under nitrogen in a 4-necked glass flask for 1 hr during which time water was removed via a Dean-Stark apparatus. After cooling the reactor contents to 90 °C, HDI (6.15 g) was then added to the reactor and mixed for 5 minutes. Dibutyl tin dilaurate (0.21 g) was then added to the reactor and the temperature of the mixture was maintained at 90 °C with stirring for 60 minutes. Decanol (2.90g) was added and the reaction was allowed to continue for 30 minutes. A large excess of water (50g) was then added to the resulting polymer solution and the temperature of the mixture was maintained at 90 °C with stirring for 60 min. The final polymer was precipitated in hexanes and dried via vacuum at room temperature for 24 hrs.

**Example 15 - HEUR Solution Reaction with Mw of 52,000 g/mol**

PEG 8000 (200 g) and toluene (500 g) were heated to 110 °C under nitrogen in a 4-necked glass flask for 1 hr during which time water was removed via a Dean-Stark apparatus. After cooling the reactor contents to 90 °C, HDI (6.15 g) was then added to the reactor and mixed for 5 minutes. Dibutyl tin dilaurate (0.21 g) was then added to the reactor and the temperature of the mixture was maintained at 90 °C with stirring for 60 minutes. Decanol (2.90g) was added and the reaction was allowed to continue for 30 minutes. A stoichiometric amount of water (0.063g) was then added to the resulting polymer solution and the temperature of the mixture was maintained at 90 °C with stirring for 60 minutes. The final polymer was precipitated in hexanes and dried via vacuum at room temperature for 24 hrs.

**Example 16 - HEUR Solution Reaction with Mw of 56,000 g/mol**

PEG 8000 (200 g) and toluene (500 g) were heated to 110 °C under nitrogen in a 4-necked glass flask for 1 hr during which time water was removed via a Dean-Stark apparatus. After cooling the reactor contents to 90 °C, HDI (6.15 g) was then added to the reactor and mixed for 5 minutes. Dibutyl tin dilaurate (0.21 g) was then added to the reactor and the temperature of the mixture was maintained at 90 °C with stirring for 60 minutes. Decanol (2.41g) was

added and the reaction was allowed to continue for 30 minutes. A large excess of water (50g) was then added to the resulting polymer solution and the temperature of the mixture was maintained at 90 °C with stirring for 60 minutes. The final polymer was precipitated in hexanes and dried via vacuum at room temperature for 24 hrs.

**Example 17 - HEUR Solution Reaction with Mw of 66,000 g/mol**

PEG 8000 (200 g) and toluene (500 g) were heated to 110 °C under nitrogen in a 4-necked glass flask for 1 hr during which time water was removed via a Dean-Stark apparatus. After cooling the reactor contents to 90 °C, HDI (6.15 g) was then added to the reactor and mixed for 5 minutes. Dibutyl tin dilaurate (0.21 g) was then added to the reactor and the temperature of the mixture was maintained at 90 °C with stirring for 60 minutes. Decanol (1.93g) was added and the reaction was allowed to continue for 30 minutes. A large excess of water (100g) was then added to the resulting polymer solution and the temperature of the mixture was maintained at 90 °C with stirring for 60 minutes. The final polymer was precipitated in hexanes and dried via vacuum at room temperature for 24 hrs.

**Example 18 - HEUR Solution Reaction with Mw of 73,000 g/mol**

PEG 8000 (200 g) and toluene (500 g) were heated to 110 °C under nitrogen in a 4-necked glass flask for 1 hr during which time water was removed via a Dean-Stark apparatus. After cooling the reactor contents to 90 °C, HDI (6.15 g) was then added to the reactor and mixed for 5 minutes. Dibutyl tin dilaurate (0.21 g) was then added to the reactor and the temperature of the mixture was maintained at 90 °C with stirring for 60 minutes. Decanol (1.45g) was added and the reaction was allowed to continue for 30 minutes. A large excess of water (200g) was then added to the resulting polymer solution and the temperature of the mixture was maintained at 90 °C with stirring for 60 minutes. The final polymer was precipitated in hexanes and dried via vacuum at room temperature for 24 hrs.

**Example 19 - HEUR Melt Reaction with Mw of 113,000 g/mol**

CARBOWAX™ 8000 Polyethylene Glycol (1500 g) was heated to 110 °C *in vacuo* in a batch melt reactor for 2 h. After cooling the reactor contents to 85 °C, BHT (0.156 g) and Intermediate 1 (17.10 g) was added to the reactor and mixed for 5 minutes. HDI (39.35 g) was then added to the reactor and mixed for 5 minutes. Bismuth octoate (28% Bi, 3.75 g) was then added to the reactor and the temperature of the mixture was maintained at 85 °C with stirring for 10 minutes. Water (250g) was added to the reactor and mixing continued for 15 minutes. The resulting molten polymer mixture was removed from the reactor and cooled. Additional water was added to the reactor to rinse out any remaining polymer and the rinses combined with the product mixture. Lactic acid was also added to suppress the viscosity of the solution to obtain a final aqueous solution containing 25 wt% polymer solids and 1 wt% lactic acid.

**Example 20 - HEUR Melt Reaction with Mw of 92,500 g/mol**

The procedure of Example 20 was followed using these amounts of ingredients: CARBOWAX™ 8000 Polyethylene Glycol (1500 g), BHT (0.156 g), Intermediate 1 (17.27 g), HDI (46.36 g), bismuth octoate (3.75 g), and water (250g). Water rinses were combined to obtain final aqueous solution product containing 25 wt% polymer solids and 1% lactic acid.

**Example 21 - HEUR Melt Reaction with Mw of 71,000 g/mol**

The procedure of Example 20 was followed using these amounts of ingredients: CARBOWAX™ 8000 Polyethylene Glycol (1500 g), BHT (0.157 g), Intermediate 1 (25.91 g), HDI (46.36 g), bismuth octoate (3.75 g), and water (250g). Water rinses were combined to obtain final aqueous solution product containing 25 wt% polymer solids and 1% lactic acid.

**Example 22 - HEUR Melt Reaction with Mw of 41,000 g/mol**

The procedure of Example 20 was followed using these amounts of ingredients: CARBOWAX™ 8000 Polyethylene Glycol (1500 g), BHT (0.161 g), Intermediate 1 (52.54 g), HDI (60.44 g), bismuth octoate (3.75 g), and water (250g). Water rinses were combined to obtain final aqueous solution product containing 25 wt% polymer solids and 1% lactic acid.

**Example 23 - HEUR Melt Reaction with Mw of 46,000 g/mol**

The procedure of Example 20 was followed using these amounts of ingredients: CARBOWAX™ 8000 Polyethylene Glycol (1500 g), BHT (0.160 g), Intermediate 1 (51.75 g), HDI (50.52 g), bismuth octoate (3.75 g), and water (250g). Water rinses were combined to obtain final aqueous solution product containing 25 wt% polymer solids and 1% lactic acid.

**Example 24 - HEUR Melt Reaction with Mw of 57,000 g/mol**

CARBOWAX™ 8000 Polyethylene Glycol (1717.8 g) was heated to 110 °C *in vacuo* in a batch melt reactor for 2 h. With temperature maintained at 110 °C, BHT (0.180 g) and hexanol (11.89 g) were added to the reactor and mixed for 5 minutes. DESMODUR ™ W (DesW, 67.08 g) was added to the reactor and mixed for 5 minutes. Bismuth octoate (28% Bi, 4.29 g) was then added to the reactor and the temperature of the mixture was maintained at 110 °C with stirring for 8 minutes. The resulting molten polymer was removed from the reactor and cooled.

**Example 25 - HEUR Melt Reaction with Mw of 68,000 g/mol**

The procedure of Example 25 was followed with the following amounts of each ingredient: CARBOWAX™ 8000 Polyethylene Glycol (1734.9 g), BHT (0.181 g), hexanol (9.1 g), DesW (64.18 g) and bismuth octoate (4.34 g).

**Example 26 - HEUR Melt Reaction with Mw of 79,500 g/mol**

The procedure of Example 25 was followed with the following amounts of each ingredient: CARBOWAX™ 8000 Polyethylene Glycol (1720.5 g), BHT (0.179 g), hexanol (6.43 g), DesW (60.47 g) and bismuth octoate (4.30 g).

**Example 27 - HEUR Melt Reaction with Mw of 102,500 g/mol**

CARBOWAX™ 8000 Polyethylene Glycol (1200 g) was heated to 110 °C *in vacuo* in a batch melt reactor for 2 h. After cooling the reactor to 85 °C, BHT (0.125 g) and nonanol (9.48 g) were added to the reactor and mixed for 5 minutes. HDI (30.14 g) and DESMODUR™ N3600 (5.47 g) were added to the reactor and mixed for 5 minutes. Bismuth octoate (28% Bi, 3.00 g) was then added to the reactor and the temperature of the mixture was maintained at 85 °C with stirring for 10 minutes. Water (1000 g) was then added to the reactor and mixing continued for another 10 minutes. The resulting molten polymer was removed from the reactor and cooled. Additional water was added to the reactor to rinse out any remaining polymer and the rinses combined with the product mixture to obtain a final aqueous solution containing 20 wt% polymer solids.

**Example 28 - HEUR Solution Reaction with Mw of 64,000 g/mol**

CARBOWAX™ 8000 Polyethylene Glycol (150 g) and toluene (400 g) were heated to 110 °C under nitrogen in a 4-necked glass flask for 2 hours during which time water was removed via a Dean-Stark apparatus. After cooling the reactor contents to 80 °C, HDI (3.76 g) was then added to the reactor and mixed for 5 minutes. Dibutyl tin dilaurate (0.21 g) was then added to the reactor and the temperature of the mixture was maintained at 80 °C with stirring for 60 minutes. ISOFOL™ 12 (1.89 g) was added and the reaction was allowed to continue for 60 minutes. The final polymer was isolated via rotary evaporation of the toluene.

Kubelka-Munk S/mil Test Method

Two draw-downs were prepared on Black Release Charts (Leneta Form RC-BC) for each paint using a 1.5-mil Bird draw down bar and the charts allowed to dry overnight. Using a template, 3.25"x 4" rectangles were cut out with an X-ACTO knife on each chart. The Y-reflectance was measured using a BYK Gardner 45° Reflectomer in each of the scribed areas five times measuring on a diagonal starting at the top of the rectangle and the average Y-reflectance recorded. A thick film draw down was prepared for each paint on Black Vinyl Charts (Leneta Form P121-10N) using a 3" 25 mil block draw down bar and the charts were allowed to dry overnight. The Y-reflectance was measured in five different areas of the draw down and the average Y-reflectance recorded. Kubelka-Munk hiding value S is given by Equation 1:

$$S = \frac{R}{X \times (1 - R^2)} \times \ln \frac{1 - (R_B \times R)}{1 - \frac{R_B}{R}}$$

where X is the average film thickness, R is the average reflectance of the thick film and $R_B$ is the average reflectance over black of the thin film. X can be calculated from the weight of the paint film ($W_{pf}$), the density (D) of the dry film; and the film area (A). Film area for a 3.25" x 4" template was 13 $in^2$.

$$X(mils) = \frac{W_{pf}(g) \times 1000(mil/in)}{D(lbs/gal) \times 1.964(g/in^3/lbs/gal) \times A(in\ \ )}$$

Table 1: HEUR molecular weight ladder constructed using PEG8000 or PEG4000, HDI and DMO via melt reaction. Some samples included additional reaction with water to further grow molecular weight. Samples tested in 17PVC semigloss architectural paint formulation at a fixed loading of 4.5 lbs / 100 gallons. Hiding was computed using Kubelka-Munk theory to obtain S/mil values.

| Examples | Mw (g/mol) | $M_N$ (g/mol) | S/mil |
|---|---|---|---|
| Comparative 1 | 35,000 | 18,000 | 5.06 |
| Example 1 | 36,500 | 20,500 | 5.59 |
| Example 2 | 63,500 | 33,500 | 6.07 |
| Example 3 | 50,000 | 27,000 | 5.71 |
| Example 4 | 60,000 | 30,000 | 5.92 |
| Example 5 | 37,000 | 21,000 | 4.92 |
| Example 6 | 34,000 | 20,000 | 4.89 |
| Example 7 | 85,000 | 40,000 | 6.05 |
| Example 8 | 29,000 | 15,000 | 5.16 |
| Example 9 | 46,000 | 22,000 | 5.35 |

Table 2: HEUR molecular weight ladder constructed using PEG8000, HDI and decanol via solution polymerization in toluene. Samples tested in 17PVC semigloss architectural paint formulation at fixed ICI and KU values. Hiding was computed using Kubelka-Munk theory to obtain S/mil values.

| Examples | Mw (g/mol) | $M_N$ (g/mol) | S/mil |
|---|---|---|---|
| Comparative 1 | 35,000 | 18,000 | 5.89 |
| Example 10 | 94,000 | 43,000 | 6.48 |
| Example 11 | 67,000 | 32,000 | 6.65 |
| Example 12 | 43,000 | 23,500 | 5.41 |

Table 3: HEUR molecular weight ladder constructed using PEG8000, HDI and decanol via solution polymerization in toluene. Additional reaction with water was used to grow molecular weight. Samples tested in 17PVC semigloss architectural paint formulation at a fixed loading of 4.5 lbs / 100 gallons. Hiding was computed using Kubelka-Munk theory to obtain S/mil values.

| Examples | Mw (g/mol) | $M_N$ (g/mol) | S/mil |
|---|---|---|---|
| Comparative 1 | 35,000 | 18,000 | 5.06 |

(continued)

| Examples | Mw (g/mol) | $M_N$ (g/mol) | S/mil |
|---|---|---|---|
| Example 13 | 39,000 | 22,000 | 5.14 |
| Example 14 | 47,000 | 26,000 | 5.74 |
| Example 15 | 52,000 | 27,000 | 6.05 |
| Example 16 | 56,000 | 30,000 | 6.07 |
| Example 17 | 66,000 | 31,000 | 5.98 |
| Example 18 | 73,000 | 35,000 | 6.10 |

Table 4: HEUR molecular weight ladder constructed using PEG8000, HDI and Intermediate 1 via melt reaction. Samples tested in 17PVC semigloss architectural paint formulation at fixed ICI and KU values. Hiding was computed using Kubelka-Munk theory to obtain S/mil values.

| Examples | Mw (g/mol) | $M_N$ (g/mol) | S/mil |
|---|---|---|---|
| Comparative 1 | 35,000 | 18,000 | 5.57 |
| Example 19 | 113,000 | 50,500 | 6.33 |
| Example 20 | 92,500 | 44,000 | 6.22 |
| Example 21 | 71,000 | 36,000 | 5.58 |
| Example 22 | 41,000 | 24,000 | 4.32 |
| Example 23 | 46,000 | 25,000 | 3.28 |

Table 5: HEUR molecular weight ladder constructed using PEG8000, DesW and hexanol via melt reaction to construct a molecular weight ladder. Samples tested in 17PVC semigloss architectural paint formulation at fixed ICI and KU values. Hiding was computed using Kubelka-Munk theory to obtain S/mil values.

| Examples | Mw (g/mol) | $M_N$ (g/mol) | S/mil |
|---|---|---|---|
| Comparative 1 | 35,000 | 18,000 | 5.37 |
| Example 24 | 57,000 | 30,000 | 6.15 |
| Example 25 | 68,000 | 33,500 | 6.17 |
| Example 26 | 79,500 | 37,500 | 6.22 |

Table 6: HEUR synthesized via melt reaction to show the effect of branching and different hydrophobes. Samples tested in 17PVC semigloss architectural paint formulation at fixed ICI and KU values. Hiding was computed using Kubelka-Munk theory to obtain S/mil values.

| Examples | Mw (g/mol) | S/mil |
|---|---|---|
| Comparative 1 | 35,000 | 5.42 |
| Example 27 | 102,500 | 6.06 |
| Example 28 | 64,000 | 6.31 |

**Claims**

**1.** A water soluble or water dispersible associative thickener having a) a hydrophobic portion with a calculated log P in the range of from 2.9 to 8.2; and b) a weight average molecular weight (Mw) from 48,000 to 150,000; wherein the associative thickener comprises a polyether, a polyalkylene oxide, a polymethacrylamide, a polysaccharide, or

a polyvinyl alcohol backbone.

2. The thickener of claim 1 comprising polymerized units of a water-soluble polyalkylene glycol having a weight average molecular weight from 4,000 to 10,000; a $C_4$-$C_{20}$ aliphatic diisocyanate; and a hydrophobic capping agent or hydrophobic difunctional agent.

3. The thickener of claim 2 wherein $M_w$ of the thickener is from 50,000 to 100,000.

4. The thickener of claim 3 wherein the aliphatic diisocyanate is a $C_4$-$C_{15}$ aliphatic diisocyanate.

5. The thickener of claim 4 wherein the hydrophobic capping agent is an alcohol or a tertiary aminoalcohol.

6. A hydrophobically modified alkylene oxide poly(urethane-urea-allophanate) thickener comprising polymerized units of: (a) a water-soluble polyalkylene glycol having a weight average molecular weight ($M_w$) from 4,000 to 10,000; (b) a $C_4$-$C_{20}$ aliphatic diisocyanate; and (c) a hydrophobic capping agent or hydrophobic difunctional agent; and wherein $M_w$ of the thickener is from 48,000 to 150,000.

7. The thickener of claim 6 wherein the water-soluble polyalkylene glycol is a polyethylene glycol having $M_w$ from 6,000 to 10,000.

8. The thickener of claim 7 wherein $M_w$ of the thickener is from 50,000 to 100,000.

9. The thickener of claim 8 wherein the aliphatic diisocyanate is a $C_4$-$C_{15}$ aliphatic diisocyanate.

10. The thickener of claim 9 having a 2 to 50 percent stoichiometric excess of diisocyanate units with respect to the sum of the moles of isocyanate reactive groups of the polyalkylene glycol and the capping agent or the hydrophobic difunctional agent or a combination thereof.

Europäisches Patentamt
European Patent Office
Office européen des brevets

# EUROPEAN SEARCH REPORT

Application Number
EP 16 19 5150

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 444 432 A1 (ROHM & HAAS [US]) 25 April 2012 (2012-04-25) * claims 1-13; examples 1, 2 * | 1-5 | INV. C08G18/48 C08G18/73 C08G18/75 C08G18/08 C08G18/22 C08G18/24 C08G18/28 C09D7/00 C09D175/08 C08G18/30 C08G18/10 C08G18/12 |
| X | EP 1 972 665 A2 (ROHM & HAAS [US]) 24 September 2008 (2008-09-24) * claims 1-12; example 9 * | 1,2,4,5 | |
| X | US 2006/106153 A1 (BLANKENSHIP ROBERT M [US] ET AL) 18 May 2006 (2006-05-18) * paragraph [0031]; claims 1-10; example 1.9 * | 1-5 | |
| X | EP 2 894 178 A1 (ROHM & HAAS [US]) 15 July 2015 (2015-07-15) * examples 1-6 * | 1-10 | |
| | | | TECHNICAL FIELDS SEARCHED (IPC) |
| | | | C08G C09D |

The present search report has been drawn up for all claims

1

| Place of search | Date of completion of the search | Examiner |
|---|---|---|
| Munich | 27 February 2017 | Sütterlin, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 16 19 5150

This annex lists the patent family members relating to the patent documents cited in the above-mentioned European search report. The members are as contained in the European Patent Office EDP file on The European Patent Office is in no way liable for these particulars which are merely given for the purpose of information.

27-02-2017

| Patent document cited in search report | Publication date | Patent family member(s) | Publication date |
|---|---|---|---|
| EP 2444432 A1 | 25-04-2012 | AU 2011227001 A1 | 10-05-2012 |
| | | CN 102532474 A | 04-07-2012 |
| | | CN 103834158 A | 04-06-2014 |
| | | EP 2444432 A1 | 25-04-2012 |
| | | EP 2527382 A1 | 28-11-2012 |
| | | JP 5813431 B2 | 17-11-2015 |
| | | JP 2012092304 A | 17-05-2012 |
| | | KR 20120048476 A | 15-05-2012 |
| | | US 2012101223 A1 | 26-04-2012 |
| | | US 2014011967 A1 | 09-01-2014 |
| EP 1972665 A2 | 24-09-2008 | AU 2008201030 A1 | 09-10-2008 |
| | | BR PI0800656 A2 | 08-09-2009 |
| | | CN 101298514 A | 05-11-2008 |
| | | EP 1972665 A2 | 24-09-2008 |
| | | EP 2112206 A1 | 28-10-2009 |
| | | JP 5123007 B2 | 16-01-2013 |
| | | JP 2008231421 A | 02-10-2008 |
| | | US 2008234411 A1 | 25-09-2008 |
| US 2006106153 A1 | 18-05-2006 | NONE | |
| EP 2894178 A1 | 15-07-2015 | AU 2014246691 A1 | 14-05-2015 |
| | | BR 102014025321 A2 | 29-09-2015 |
| | | CA 2867276 A1 | 28-04-2015 |
| | | CN 104558502 A | 29-04-2015 |
| | | EP 2894178 A1 | 15-07-2015 |
| | | US 2015119525 A1 | 30-04-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7741402 B